# EUROPEAN PATENT SPECIFICATION

(11) **EP 2 201 995 B1**
(45) Date of publication and mention of the grant of the patent: **27.06.2018**
(21) Application number: 10156401.1
(22) Date of filing: 27.01.2006
(51) Int. Cl.: B01D 61/12, B01D 65/10, C02F 1/44

(54) **Method of controlling a reverse osmosis water treatment system**
Methode zur Regelung eines Umkehrosmosesystems zur Wasserbehandlung
Methode de commande d'un système à osmose inverse pour le traitement de l'eau

(30) Priority: 27.01.2005 US 647680 P
(43) Date of publication of application: 30.06.2010
(62) Divisional of application: 06734034.9
(73) Proprietor: EcoWater Systems, LLC, Woodbury, MN 55125 (US)
(72) Inventor: Kennedy, Gregory, Maplewood, MN 55177 (US); Sinkula, David, Coon Rapids, MN 55433 (US); Zimmerman, Jeffrey, Forest Lake, MN 55025 (US); Khamis, Chaouki, Edina, MN 54424 (US); Stoick, Michael, New Market, MN 55054 (US); Dusheck, Nathan, Hammond, MN 54015 (US)
(74) Representative: Zeitler Volpert Kandlbinder Patent- und Rechtsanwälte Partnerschaft mbB

(56) References cited:
- US-A- 4 708 791
- US-A- 4 830 757
- US-A- 4 851 818
- US-A- 5 132 017
- US-A- 5 779 911

## Description

### FIELD OF INVENTION

The present invention relates to a computer implemented method of monitoring the performance of reverse osmosis water treatment systems.

### BACKGROUND OF THE INVENTION

Reverse osmosis systems are known. The main part of the system is a semi-permeable membrane through which the untreated water passes. Such systems typically include an additional carbon or ceramic filter which removes contaminates either prior to passing through the membrane or after. Such systems are often installed in residential applications.

The prior art includes electronic systems which detect when the reverse osmosis membrane requires replacement. Typical prior art systems include measuring the conductivity of the water entering the reverse osmosis cartridge, and then measuring the conductivity of the water at the outlet of the reverse osmosis cartridge. The conductivity of the water is proportional to the total dissolved solids. A ratio of the conductivity levels will provide an indication of the rejection efficiency of the reverse osmosis membrane.

Prior art systems also include an application wherein a permeate pump is included in a factory installation. The permeate pump provides greater efficiency in the system. The permeate pump increases the net pressure across the reverse osmosis membrane by isolating the membrane pressure from the pressure in the products water and thus reducing the permeate back pressure.

The prior art also includes systems which address reducing the spillage of fluid occurring during replacement of the cartridges. Various methods to control the permeate quality of reverse osmosis systems are known: According to US 5 132 017 A
the rejection is assessed using both feed and permeate conductivity. An alarm is triggered if a threshold value of the rejection is measured.In US 4 830 757 A the measured value is compared with a pre-set user implemented (fix)set-point. In US 5 779 911 long term storage of data is used to establish a system norm which indicate deviations from normal operation. US 4 851 818 A and US 4 708 791 A generally disclose the use of permeate conductivity for operation surveillance.

### SUMMARY OF THE INVENTION

The present invention as defined in claim 1 provides an improved method of monitoring the performance of a reverse osmosis membrane in a drinking water supply system.

### BRIEF DESCRIPTION OF THE DRAWINGS

Fig. 1 is a perspective view of a water treatment system with a reverse osmosis cartridge and two filter cartridges.
Fig. 2 is a perspective view of a filter cartridge of Fig. 1.
Fig. 3 is a top view of the filter cartridge of Fig. 2.
Fig. 4 is an exploded view of the filter cartridge of Fig. 2.
Fig. 5 is a bottom perspective view of a manifold head incorporated in the water treatment system of Fig. 1.
Fig. 6 is a block diagram of a reverse osmosis membrane monitoring system.
Fig. 7 is a process flow chart in accordance with the invention for the system of Fig. 6.
Fig. 8 is a perspective view of a modular manifold head system.
Fig. 9 is top perspective view of a modular manifold head.
Fig. 10 is a schematic diagram of a reverse osmosis water treatment system with a permeate pump.
Fig. 11 is a cross-sectional view of the modular manifold head and cartridges of Fig. 1.
Fig. 12 is a top perspective view of a modular manifold head in a permeate pump application.

### DETAILED DESCRIPTION OF THE INVENTION

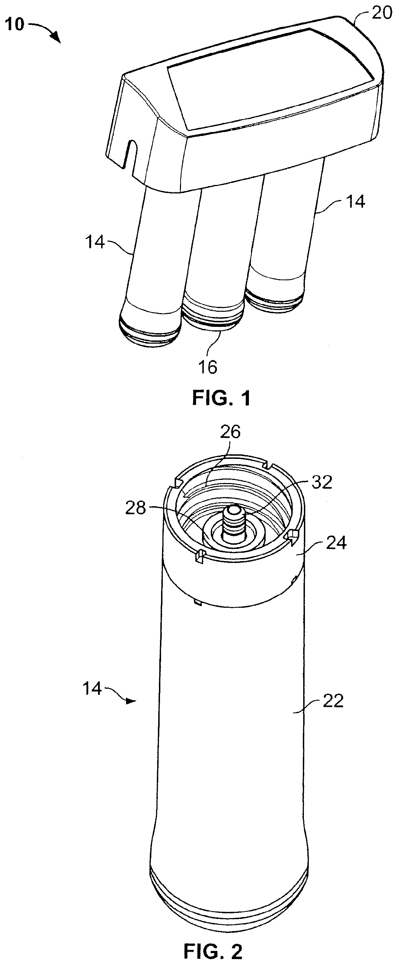

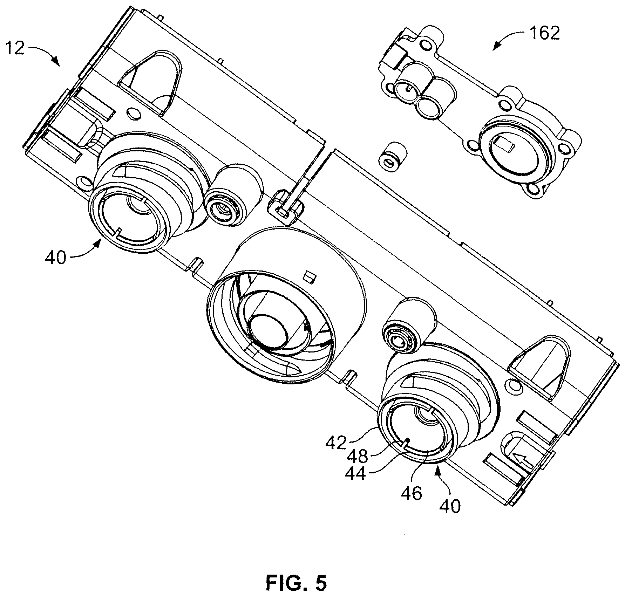

Fig. 1 shows one embodiment of a water treatment system 10. The system includes a manifold head 12, (see Fig. 5) a first filter cartridge 14, a reverse osmosis cartridge 16 and a second filter cartridge 14. A manifold cover 20 is also shown.

Fig. 2 shows a filter cartridge 14. The filter cartridge 14 includes a housing 22 having an outer annular collar 24 with a double lead thread 26. An inner annular collar 28 is also shown which includes an O ring 30 to provide a seal. A connection fitting 32 is shown extending through the annular collar 28.

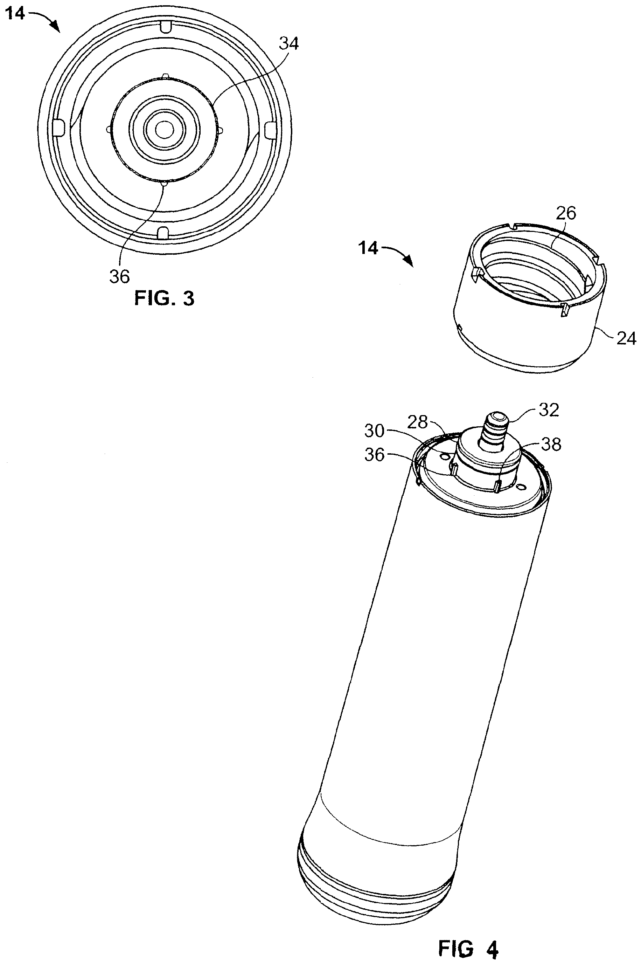

Fig. 3 shows a top view of the filter cartridge 14 and shows the cylindrical wall 34 of the inner annular collar 28, as well as the longitudinal extending bead 36.

Fig. 4 shows the filter cartridge 14 in an exploded view so as to more clearly show the longitudinal extending bead 36. It can be seen that the longitudinal extending bead 36 includes a leading end 38.

Fig. 5 shows the manifold head 12 having the filter cartridge connection fitting 40. The filter cartridge connection fitting 40 includes a threaded outer annular collar 42 and an inner annular collar 44. The inner annular collar 44 having an annular lip 46 and four longitudinal slots 48. The longitudinal slots 48 are equally spaced apart from one another.

It will be appreciated that when the filter cartridge 14 is rotated into a fully secured position onto the connection fitting 40, the filter cartridge 14 comes to rest with the longitudinal extending beads 36 being received by the respective slot 48.

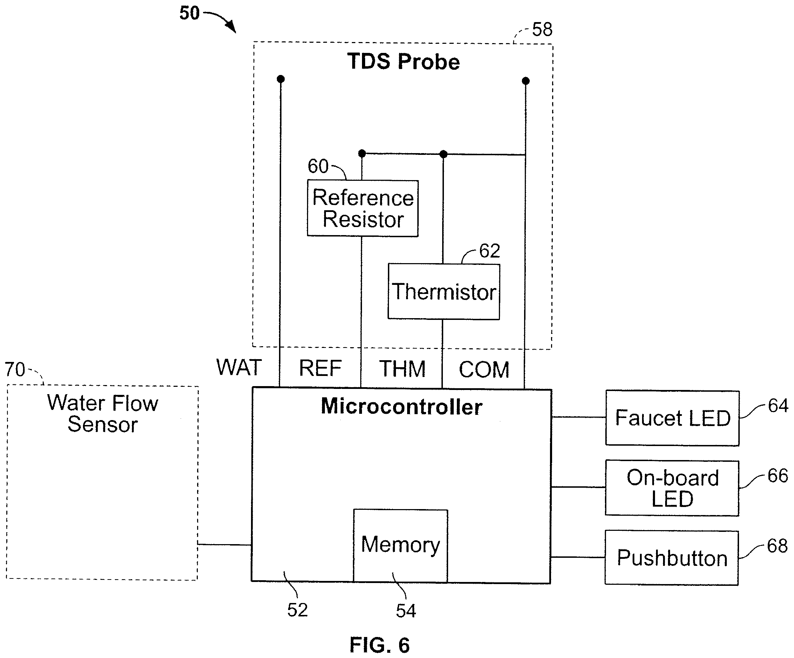

Fig. 6 shows a block diagram of a system 50 for monitoring the performance of a reverse osmosis membrane. The system 50 includes a microcontroller 52 having a memory 54 wherein a program resides. The system 50 includes a single probe set 58 which is located downstream of the reverse osmosis membrane. The probe set 58 includes a reference resistor 60 and a thermal resistor 62. The microcontroller 52 is coupled to a faucet LED 64 for providing an indication to replace the reverse osmosis cartridge. The microcontroller 52 is also coupled to an onboard LED 66 for feedback during operation of an onboard push button 68 also coupled to the microcontroller 52. A water flow sensor 70 is also coupled to the microcontroller 52.

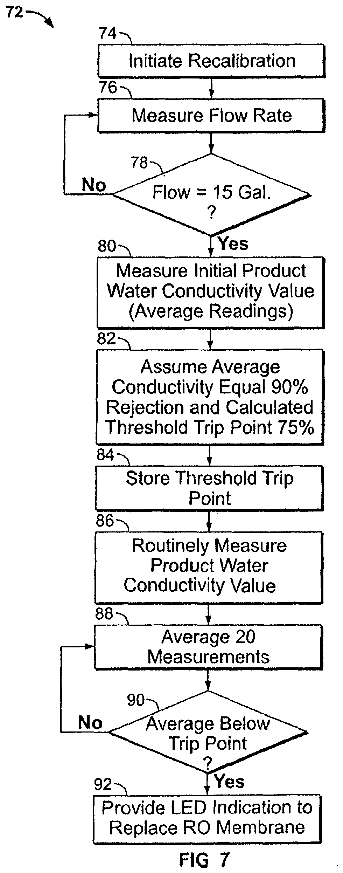

Fig. 7 shows a block diagram 72 which represents the functional steps as executed by the program resident in the memory 54.

Step 74 provides the initiate recalibration routine. The initiate recalibration routine occurs after the reverse osmosis membrane has been replaced and after a power on routine occurs. At step 76, the system measures the flow of water through the system. At step 78, the system determines or detects the flow of 56.8 L (fifteen gallons) of water through the system. At step 80, the system measures the initial water conductivity downstream of the reverse osmosis membrane. In one embodiment, step 80 the initial product water conductivity value is based on averaging approximately 10-50 water conductivity measurements. At step 82, the product water conductivity value or average conductivity is assumed to equal a 90% rejection. Step 82 then calculates a threshold trip point based on 75% rejection. Step 84 stores the threshold trip point. Step 86 consists of routinely measuring the product water conductivity value. Step 88 consists of averaging the previous twenty measurements of the water conductivity. At Step 90, it is determined whether the average of step 88 is below the threshold trip point of step 84. In the event the average is below the threshold trip point, the system proceeds to step 92 which provides an LED indication to replace the reverse osmosis membrane.

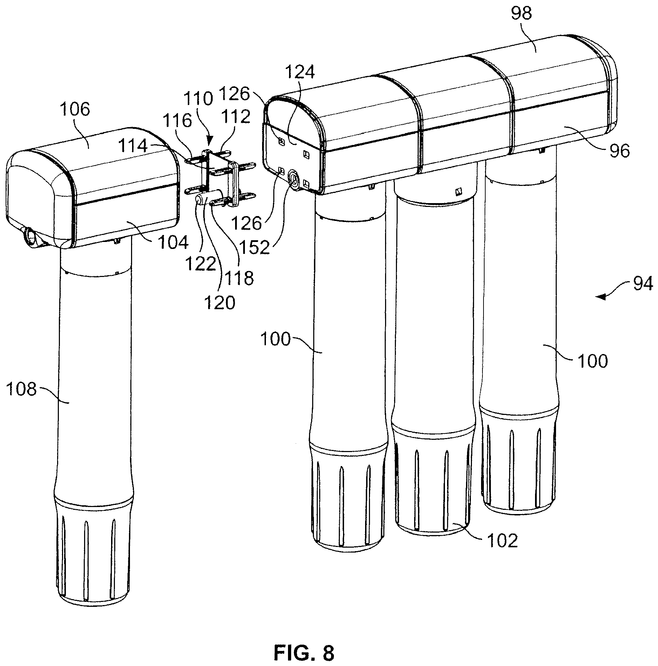

Figure 8 is a modular water treatment system 94. The water treatment system 94 shown in Fig. 8 includes a modular manifold head 96, a manifold cover 98, a first filter cartridge 100, a reverse osmosis cartridge 102 and a second filter cartridge 100. Also shown is a further modular manifold head 104 and cover 106, as well as an additional cartridge unit 108. The system of Fig. 8 provides a modular system wherein additional modular manifold units 104, 106, 108 may be coupled to the water treatment system 94 via a clip 110. The clip 110 includes a plurality of arms 112 extending from a planar body portion 114. Each arm 112 includes a slot 116 and a slanted leading edge 118. The clip 110 also includes a tubular portion 120 extending through the main body portion 114. The tubular portion 120 includes a bore 122 extending throughout the tubular portion 120.

Each manifold 12, 96, 104 includes an end wall 124 having four openings 126.

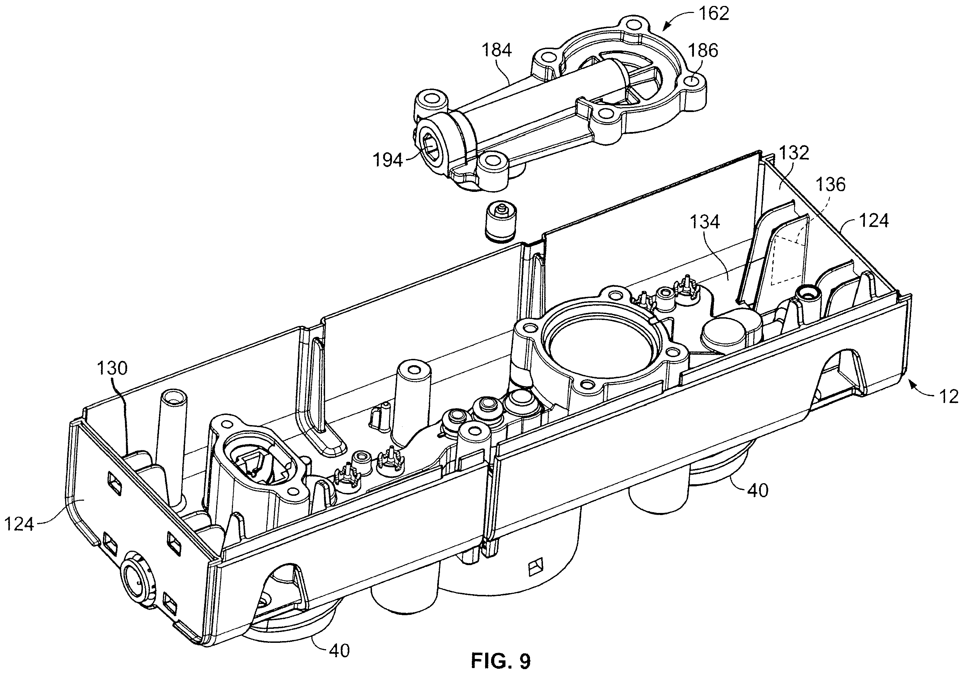

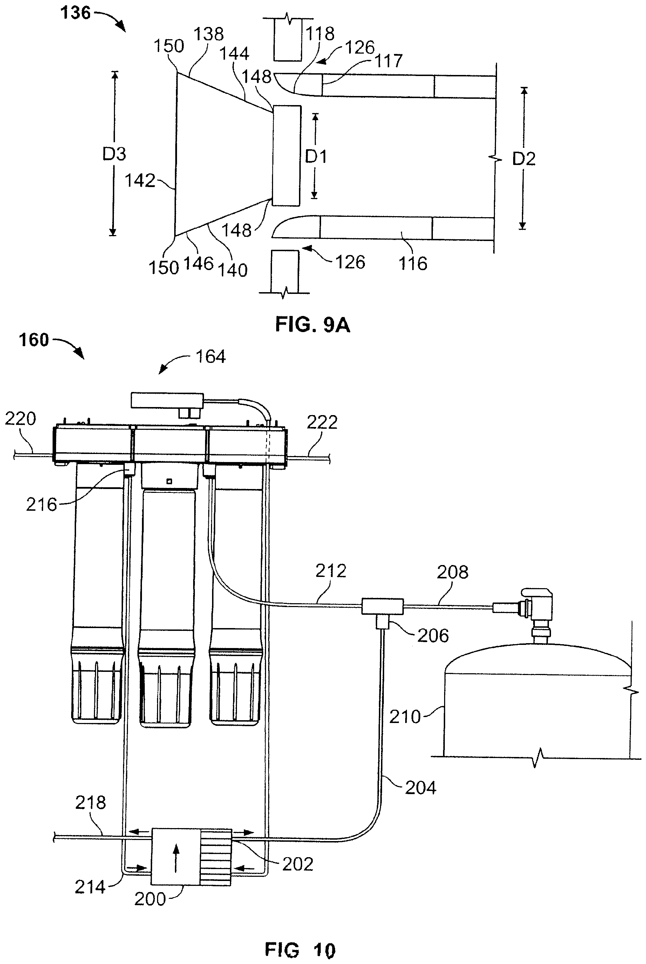

Fig. 9 shows a perspective view of the manifold 12 including the two end walls 124 each having four openings 126. The openings 126 are arranged in pairs, one above the other. For example, lower opening 126 and upper opening 126 comprise one pair. Each pair of openings 126 includes a pair of upright walls 130 in a spaced apart facing relationship. The upright walls 130 are shown extending from the interior surface 132 of the end wall 124 and the lower surface 134 of the manifold head 12. A flange 136 extends from the inner surface 132 of the end wall 124 towards the interior compartment of the manifold head 12. The flange 136 includes an upper ramp 138 and a lower ramp 140. The flange 136 includes a forward edge 142 and first and second side edges 144, 146. The forward edge 142 is generally parallel to the end wall 124. The first side edge 144 and second side edge 146 form the upper ramp and lower ramp 138, 140. The upper ramp 138 and lower ramp 140 diverge from one another in a direction away from the inner interior surface 132 towards the interior compartment of the manifold head 12. One of the four flanges 136 is shown in phantom in Fig. 9. The ramps 138, 140 include a proximal end 148 and a distal end 150. The proximal end 148 is located slightly away from the edge of the opening 126. The distal end 150 is spaced in an interference relationship regarding alignment of the opening 126. Fig. 9A shows additional detail.

With reference to Fig. 8, it will be appreciated that as the clip 110 is inserted into the openings 126 of the manifold head 96 to the right of the figure, the slanted edge 118 of each of the resilient arms 112 will be deflected by the respective ramp 138, 140. Once the clip 110 is fully inserted through the four openings 126, the slot 116 will extend past the distal end 150 and the two arm pairs will clamp about the respective distal end 150 with the edge of the slot 116 coming into locking engagement with the distal end 150 of the ramp 138, 140. Meanwhile, the tubular portion 120 will be received by the tube fitting connector 152 for sealing engagement. The other modular manifold head 104 will be coupled in similar manner.

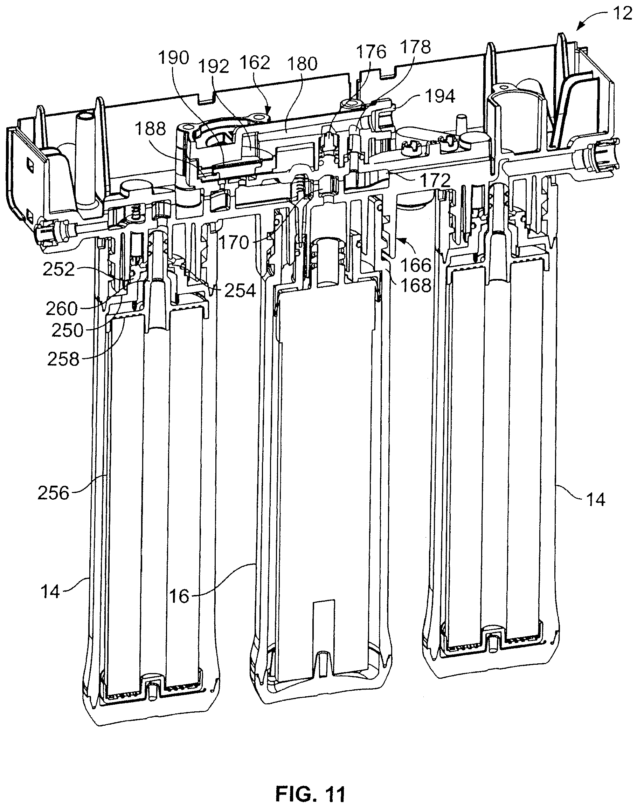

Fig. 10 shows a graphical representation of a water treatment system 160 wherein an automatic shut-off valve cover 162 (see Figs. 5 and 9) may be removed and replaced with another cover 164 adapted to accommodate a permeate pump application. With reference to Fig. 11, a cross-section of a water treatment system is shown including the modular manifold head 12, first cartridge 14, reverse osmosis cartridge 16 and second filter cartridge 14. The manifold head 12 is shown to include a connection fitting 166 for receiving the respective connection fitting 168 of the reverse osmosis cartridge 16. The manifold head 12 includes a first manifold access port 170 for coupling to an output of a reverse osmosis cartridge 16, a second manifold access port 172 coupled to an output of a reverse osmosis stage. A non-permeate pump cover 162 is adapted to seal the first and second access ports 170, 172 for a non-permeate pump application. A permeate pump cover 164 is adapted to also seal the first and second access ports 170, 172 and includes a permeate pump output port 174 which receives a tube fitting connector 175. The permeate pump cover 164 includes a first access and a second access port 176, 178 and a flow channel 180 in communication with the first and second access ports, as well as the permeate pump output port 174. A check valve assembly is located in the first access port 176 for coupling the output of the reverse osmosis cartridge 16. The second cover 164 includes a substantially planer body portion 184 which defines a first end and a second end. Mounting holes 186 are provided for fastening the cover to the manifold head.

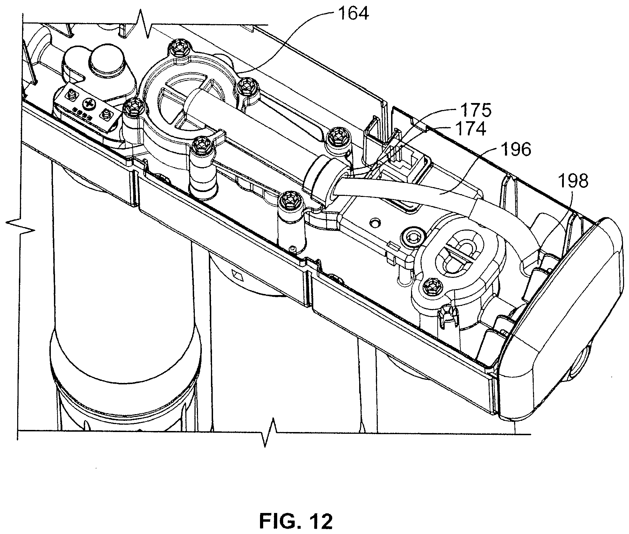

The manifold includes a lower diaphragm receptacle portion 188 having an opened upper portion. The second cover 164 includes an upper diaphragm receptacle portion 190 for mating with the opened upper portion to form a diaphragm cavity which receives a diaphragm. The upper diaphragm receptacle portion 190 includes an opening 192 in fluid communication with the fluid channel 180. The manifold head includes a flow channel coupled to an output port of a pre-filter stage and an input port of the reverse osmosis stage, wherein the flow channel is in fluid communication with the lower diaphragm receptacle portion 188 of the manifold head. It will appreciated that the water treatment system may be assembled at the factory with a non-permeate pump cover 162, wherein the plug 194 is provided at the permeate pump output port 174. A retrofit kit may be provided wherein the first cover 162 is removed and replaced with the second cover 164 having the tube fitting connector 175. A quarter inch tubing 196 may then be coupled to the tube fitting connector 175 and extend through a routing hole 198 as shown in Fig. 12. The tubing 196 extends downward and to a permeate pump 200 as shown in Fig. 10. The permeate pump 200 has a permeate outport 202 having a tubing 204 which runs to a T-connector 206. The T-connector 206 has a further tubing 208 coupled to a storage tank 210, as well a tubing 212 coupled back to the manifold head. The brine side of the permeate pump includes a brine in 214 from the drain flow 216 of the manifold head and a brine out tubing 218 which couples to the drain point. For sake of completeness, the tubing 220 is also shown coming from the supply inlet and tubing 222 is shown going to the faucet.

The installation kit includes at a minimum the second cover 164 and further may include a replacement check valve, as well replacement O rings, tubing, fasteners and installation instructions.

Fig. 11 also shows the filter cartridge 14 having a reduced gap at the connection fitting 32 in order to minimize spillage during changing of the filter cartridge. The novel features of the filter cartridge are explained below. However, it will be apparent that the features can be incorporated into the reverse osmosis cartridge as well.

The filter cartridge 14 includes external cartridge housing 22 having a cylindrical portion with a top portion and a bottom portion. The bottom portion has a closed end. The top portion includes a shoulder 250 having a generally cylindrical neck portion 252 extending upward from the shoulder 250. The cylindrical neck portion 252 defines a portion of a connection fitting. The cylindrical neck portion 252 defines a cylindrical bore having a cylindrical bore wall which defines a first diameter. The cylindrical bore wall includes an annular ring 254 protruding from the wall and defining a second diameter which is smaller than the first diameter. An internal cartridge housing 256 includes a top portion with a shoulder 258, a tube portion 260 extending upward from the internal shoulder 258, and the tube portion 260 defining an outlet bore. The tube portion 260 defines an outer diameter having a third diameter, wherein the third diameter is smaller than the first and second diameter. The tube portion 260 and the annular ring 254 define a cartridge inlet having an annular gap. It will be appreciated that the annular gap is minimized by this design and thereby reduces the likelihood of spillage. The manifold head is adapted to conform with the filter cartridge 14. In particular, the manifold head includes a connection fitting 40 which includes an internal annular collar having a length defined such that when the cartridge 14 is assembled to the manifold, the internal annular collar extends around the tube portion 260 and up to the annular ring, with a minimum spacing for tolerance. Also described is a cartridge 14 which has a reduced inlet opening to reduce spillage during changing of the cartridge. Also described is a locking mechanism for an encapsulated manifold and cartridge, the locking mechanism comprising
an encapsulated manifold 12 having a connection fitting 40, the connection fitting 40 having a threaded outer annular collar 42 and an inner annular collar 44, the inner annular collar 44 having an annular lip 46 and at least one longitudinal slot 48 extending from the lip 46) along a portion of the annular collar 44; and
a cartridge (14) having a connection fitting 32, the connection fitting 32 having a threaded outer annular collar 24 for mating with the threaded outer annular collar 42 of the manifold 12, the connection fitting 32 of the cartridge 14 also having a cylindrical wall 34 located within the threaded outer annular collar 24 of the cartridge 14, the cylindrical wall 34 having at least one longitudinal extending bead 36 which is received by the respective slot 48 upon the cartridge 14 being threadingly fastened to the manifold to a fully secured position.

According to a particular feature, the longitudinal extending bead 36 engages the annular lip 46 approximately 1/8 of a turn prior to the fully secured position.

According to a particular feature, the manifold 12 includes four longitudinal slots 48 extending from the lip 46 along a portion of the annular collar 44 and equally spaced apart circumferentially about the annular collar 44, and the cartridge 14 includes four longitudinal extending beads 36 extending along the cylindrical wall 34, the four longitudinal extending beads 36 are equally spaced about the cylindrical wall 34, each of the longitudinal extending beads 36 is adapted to be received by a respective slot 48 with the cartridge 14 in the fully secured position. Also described is a modular system for coupling water filter manifold heads, the system comprising (as illustrated in Figures 8-9A):
a first and second manifold head 96, 104, each manifold head having a first side 124 and a manifold head cavity, the first side 124 including a pair of ramps 138, 140, each ramp having a first end and a second end, with a ramp edge 144, 146 defined between the first end and second end, the pair of ramps arranged in an opposed and outwardly facing relationship, with the first ends 148 adjacent the first side 124 and the second ends 150 extending away from the first side 124 inward within the manifold head cavity, the first ends 148 of the pair of ramps 138, 140 defining a distance D1, and the second ends 150 of the pair of ramps 138, 140 defining a distance D3, wherein the distance D3 is greater than the distance D1, the pair of ramps 138, 140 each defining, at the second end 150, a locking edge extending in a direction which diverge; and
a clip 110 having a body 114, a first pair of arms 112 extending from the body 114 in a generally first direction, and a second pair of arms 112 extending from the body 114 in a generally opposite direction, each pair of arms 112 having a latch 117 at a distal end, each pair of latches 117 define a distance D2, wherein D1 is less than or equal to D2 which is less than or equal to D3. Also described is an installation kit for replacing an automatic shutoff valve cover previously assembled on a manifold head of a water treatment system, wherein the manifold head includes a first access port adapted to be coupled to an output of a reverse osmosis cartridge, a second access port coupled to an output of the reverse osmosis stage, the kit comprising (as illustrated in figures 10-11):
a cover 164 having a cover first access port 170, a cover second access port 172, and having a permeate pump output port 174 with a tube fitting connector 175 for permeate pump application.

According to a particular feature, the installation kit further comprises a check valve assembly adapted to be received in the cover first access port 170.

According to a particular feature, the cover includes a substantially planar body portion having a fluid channel which extends longitudinally within the planar body portion, wherein one end of the body portion includes the permeate pump output port with the tube fitting connector, the cover second access port adjacent the tube fitting connector and the cover first access port is adjacent the cover second access port on a side opposite from the tube fitting connector.

According to a particular feature, the installation kit further comprises replacement O-rings for the cover first and second access ports 176, 178.

## Claims

1. Computer-Implemented method of monitoring the performance of a reverse osmosis membrane in a drinking water supply system, the method carried out by a computer program, the method comprising the steps of:
initiating (step 74) a reverse osmosis membrane recalibration;
determining (step 76) the flow amount of a predetermined amount of water through the system;
measuring (step 80) the initial permeate conductivity downstream of the reverse osmosis membrane after the predetermined amount of water has flown through the system;
calculating (step 82), using the measured initial permeate conductivity (step 80), a predetermined total dissolved solids rejection ratio, and calculating therefrom a threshold trip point which corresponds to said predetermined total dissolved solids rejection ratio, wherein calculating said threshold trip point includes:
measuring said initial permeate conductivity values;
equating an average of said initial permeate conductivity values to said total dissolved solids rejection ratio, and defining said average at ninety percent (90%) rejection; and
calculating said threshold trip point at seventy-five percent (75%) of said average;
storing (step 84) the threshold trip point in memory (54) of the system;
routinely measuring (step 86) the permeate conductivity downstream of the reverse osmosis membrane after said flow of said predetermined amount of water has been reached;
determining (step 90) whether the permeate conductivity, as routinely measured in the prior step, is below the threshold trip point; and
providing (step 92) an indication upon determining when the permeate conductivity is below the threshold trip point.

2. Method according to claim 1, **characterized in that** the step (74) of initiating occurs after a power on routine,

3. Method according to claim 1, **characterized in that** the step of initiating (74) occurs after the reverse osmosis membrane has been replaced.

4. Method according to claim 3, **characterized in that** the step of initiating (74) includes sending an initiate recalibration signal to a microcontroller (52) of the system.

5. Method according to claim 1, **characterized in that** the step of initiating (74) includes a user activated switch to signal a reverse osmosis membrane change and to initiate a recalibration.

6. Method according to claim 1, **characterized in that** the predetermined amount of water is in a range of 38 - 114 liter (10 - 30 gallons),

7. Method according to claim 1, **characterized in that** the predetermined amount of water is 56.8 liter (15 gallons).

8. Method according to claim 1, **characterized in that** the step of measuring the water conductivity includes the step of averaging a range of 10 - 50 measurements.

9. Method according to claim 1, **characterized in that** the step of measuring the water conductivity includes the step (88) of averaging 20 measurements.

10. Method according to claim 1, **characterized in that** the step (92) of providing an indication includes illuminating a light emitting diode.

11. Method according to claim 1, **characterized In that** the memory (54) is a nonvolatile memory.

## Patentansprüche

1. Computergesteuertes Verfahren zur Überwachung des Betriebs einer Umkehrosmosemembran in einem Trinkwasser-Zufuhrsystem, umfassend die folgenden Schritte: Einleiten (Schritt 74) einer Umkehrosmosemembranrekalibrierung; Bestimmen (Schritt 76) der Durchflußmenge einer vorbestimmten Wassermenge durch das System; Messen (Schritt 80) der anfänglichen Wasserleitfähigkeit stromabwärts der Umkehrosmosemembran, nachdem die vorbestimmte Menge an Wasser durch das System geflossen ist; Berechnen (Schritt 82) unter Verwendung der gemessenen anfänglichen Wasserleitfähigkeit (Schritt 80) eines vorbestimmten Ablehnungsverhältnisses insgesamt gelöster Feststoffe und Berechnen daraus eines Schwellenwert-Auslösepunktes, der dem vorbestimmten Ablehnungsverhältnis insgesamt gelöster Feststoffe entspricht, wobei die Berechnung des Schwellenwert-Auslösepunktes folgendes beinhaltet: Messen der anfänglichen Wasserleitfähigkeitswerte; Gleichsetzen eines Durchschnitts der anfänglichen Wasserleitfähigkeitswerte mit dem vorbestimmten Ablehnungsverhältnis der insgesamt gelösten Feststoffe und Begrenzen des Durchschnitts auf neunzig Prozent (90 %) Ablehnung; und Berechnen des Schwellenauslösepunktes auf fünfundsiebzig Prozent (75 %) des Durchschnitts; Speichern (Schritt 84) des Schwellenwert-Auslösepunktes im Speicher (54) des Systems; routinemäßiges Messen (Schritt 86) der Wasserleitfähigkeit stromabwärts der Umkehrosmosemembran, nachdem der Strom der vorbestimmten Wassermenge erreicht worden ist; Bestimmen (Schritt 90), ob die Wasserleitfähigkeit, die routinemäßig in dem vorherigen Schritt gemessen wurde, unter dem Schwellenwert-Auslösepunkt liegt; und Erzeugen (Schritt 92) einer Anzeige, wenn festgestellt wurde, daß die Wasserleitfähigkeit unter dem Schwellenwert-Auslösepunkt liegt.

2. Verfahren nach Anspruch 1, **dadurch gekennzeichnet, daß** der Schritt (74) des Beginnens nach einer Einschaltroutine erfolgt.

3. Verfahren nach Anspruch 1, **dadurch gekennzeichnet, daß** der Schritt (74) des Beginnens erfolgt, nachdem die Umkehrosmosemembran ersetzt worden ist.

4. Verfahren nach Anspruch 3, **dadurch gekennzeichnet, daß** der Schritt (74) des Beginnens das Senden eines anfänglichen Rekalibrierungssignals an einen Mikrosteuerer (52) des Systems umfaßt.

5. Verfahren nach Anspruch 1, **dadurch gekennzeichnet, daß** der Schritt des Beginnens (74) einen von einem Benutzer aktivierten Schalter aufweist, um einen Umkehrosmosemembranwechsel anzuzeigen und eine erneute Kalibrierung einzuleiten.

6. Verfahren nach Anspruch 1, **dadurch gekennzeichnet, daß** die vorbestimmte Wassermenge in einem Bereich von 38 - 140 Liter liegt.

7. Verfahren nach Anspruch 1, **dadurch gekennzeichnet, daß** die vorbestimmte Wassermenge 56,8 Liter beträgt.

8. Verfahren nach Anspruch 1, **dadurch gekennzeichnet, daß** der Schritt des Messens der Wasserleitfähigkeit den Schritt der Durchschnittsbildung eines Bereiches von 10 - 50 Messungen umfaßt.

9. Verfahren nach Anspruch 1, **dadurch gekennzeichnet, daß** der Schritt des Messens der Wasserleitfähigkeit den Schritt (88) der Durchschnittsbildung von 20 Messungen umfaßt.

10. Verfahren nach Anspruch 1, **dadurch gekennzeichnet, daß** der Schritt (92) der Durchführung einer Anzeige das Einschalten einer Licht emittierenden Diode umfaßt.

11. Verfahren nach Anspruch 1, **dadurch gekennzeichnet, daß** der Speicher (54) ein ständiger Speicher ist.

## Revendications

1. Procédé implémenté par ordinateur de surveillance de la performance d'une membrane d'osmose inverse dans un système d'alimentation en eau potable, le procédé étant réalisé par un programme d'ordinateur, le procédé comprenant les étapes de :
lancement (étape 74) d'un réétalonnage de membrane d'osmose inverse ;
détermination (étape 76) de la quantité d'écoulement d'une quantité d'eau prédéterminée à travers le système ;
mesure (étape 80) de la conductivité initiale de perméat en aval de la membrane d'osmose inverse après que la quantité d'eau prédéterminée s'est écoulée à travers le système ;
calcul (étape 82), à l'aide de la conductivité initiale de perméat mesurée (étape 80), d'un taux prédéterminé de rejet de matières sèches dissoutes totales, et calcul à partir de celui-ci d'un point de déclenchement seuil qui correspond audit rapport prédéterminé de rejet de matières sèches dissoutes totales, dans lequel le calcul dudit point de déclenchement seuil comporte :
la mesure de valeurs de ladite conductivité de perméat initiale ;
la mise en équation d'une moyenne desdites valeurs de conductivité de perméat initiale audit rapport de rejet de matières sèches dissoutes totales, et la définition de ladite moyenne à un rejet de quatre-vingt-dix pour cent (90 %) ; et
le calcul dudit point de déclenchement seuil à soixante-quinze pour cent (75 %) de ladite moyenne ;
stockage (étape 84) du point de déclenchement seuil dans une mémoire (54) du système ;
mesure systématique (étape 86) de la conductivité de perméat en aval de la membrane d'osmose inverse après que ledit écoulement de ladite quantité d'eau prédéterminée a été atteint ;
la détermination (étape 90) si la conductivité de perméat telle que mesurée systématiquement à l'étape précédente, est en dessous du point de déclenchement seuil ; et
fourniture (étape 92) d'une indication lors de la détermination que la conductivité de perméat est en dessous du point de déclenchement seuil.

2. Procédé selon la revendication 1, **caractérisé en ce que** l'étape (74) de lancement se produit après une routine de mise en marche.

3. Procédé selon la revendication 1, **caractérisé en ce que** l'étape de lancement (74) se produit après que la membrane d'osmose inverse a été remplacée.

4. Procédé selon la revendication 3, **caractérisé en ce que** l'étape de lancement (74) comporte l'envoi d'un signal de réétalonnage de lancement à un microcontrôleur (52) du système.

5. Procédé selon la revendication 1, **caractérisé en ce que** l'étape de lancement (74) comporte un commutateur activé par un utilisateur pour signaler un changement de membrane d'osmose inverse et pour lancer un réétalonnage.

6. Procédé selon la revendication 1, **caractérisé en ce que** la quantité d'eau prédéterminée est dans une plage de 38 à 114 litres (10 à 30 gallons).

7. Procédé selon la revendication 1, **caractérisé en ce que** la quantité d'eau prédéterminée est de 56,8 litres (15 gallons).

8. Procédé selon la revendication 1, **caractérisé en ce que** l'étape de mesure de la conductivité d'eau comporte l'étape de calcul d'une moyenne d'une plage de 10 à 50 mesures.

9. Procédé selon la revendication 1, **caractérisé en ce que** l'étape de mesure de la conductivité d'eau comporte l'étape (88) de calcul d'une moyenne de 20 mesures.

10. Procédé selon la revendication 1, **caractérisé en ce que** l'étape (92) de fourniture d'une indication comporte l'illumination d'une diode électroluminescente.

11. Procédé selon la revendication 1, **caractérisé en ce que** la mémoire (54) est une mémoire non volatile.
